# EUROPEAN PATENT APPLICATION

(11) **EP 4 723 323 A1**
(43) Date of publication of application: **08.04.2026**
(21) Application number: 25180679.0
(22) Date of filing: 04.06.2025
(51) Int. Cl.: H01M 50/153, H01M 50/188, H01M 50/559, H01M 50/593

(54) **CAP ASSEMBLY AND SECONDARY BATTERY INCLUDING A CAP ASSEMBLY**

(30) Priority: 02.10.2024 KR 20240133992
(71) Applicant: SAMSUNG SDI CO., LTD., Yongin-si, Gyeonggi-do 17084 (KR)
(72) Inventor: PARK, Kwang Young, 17084 Yongin-Si, Gyeonggi-do (KR)
(74) Representative: Gulde & Partner

(57) **Abstract**

A cap assembly (130) for a secondary battery (100), includes: a cap plate seated on and coupled to an open end of a case accommodating an electrode assembly, the cap plate having a through-hole therethrough; a terminal plate electrically connected to the electrode assembly, and inserted into the through-hole of the cap plate; a first insulating member between the cap plate and the terminal plate to provide electrical insulation between the cap plate and the terminal plate; and a second insulating member at an outside of the first insulating member to provide electrical insulation between the cap plate and the terminal plate.

## Description

### BACKGROUND

### 1. Field

Aspects of embodiments of the present disclosure relate to a cap assembly, and the secondary battery including the cap assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, as a demand for wearable devices, such as wireless headphones or earphones, smart watches, and body-attached medical devices, has increased, the need for compact secondary batteries with high energy density and sufficiently small sizes has been increasing. For example, depending on the characteristics of the usage environment, secondary batteries having heights significantly smaller than their respective widths, such as coin cells and button cells, may be utilized.

The above information disclosed in this Background section is for enhancement of understanding of the background of the present disclosure, and therefore, it may contain information that does not constitute related (or prior) art.

### SUMMARY

Due to a very small size of a typical coin cell and material properties of a case of the typical coin cell, the case of the coin cell may be easily fractured or deformed even by a small external impact or pressure. For example, when a surface of a cap assembly coupled to the case is impacted, a short circuit may occur due to tearing and deformation of an insulating layer between a terminal plate and a cap plate included in the cap assembly, or due to deformation of the terminal plate itself. In a secondary battery, in a case where two materials with different electrode polarities come into electrical contact with each other, an internal short circuit may occur. This can lead to a rapid rise in the temperature of the secondary battery, which in some severe cases, may result in a fire.

Embodiments of the present disclosure may be directed to a cap assembly, and a secondary battery including the cap assembly.

These and other aspects and features of the present disclosure will be described in or will be apparent from the following description of embodiments of the present disclosure.

According to a first aspect of the present disclosure, a secondary battery includes a case accommodating an electrode assembly, and a cap assembly. The cap assembly includes: a cap plate seated on and (mechanically) coupled to an open end of the case, the cap plate having a through-hole therethrough; a terminal plate electrically connected to the electrode assembly, and inserted into the through-hole of the cap plate; a first insulating member (layered) between the cap plate and the terminal plate to provide electrical insulation between the cap plate and the terminal plate; and a second insulating member at an outer side (e.g. the outside) of the first insulating member to provide electrical insulation between the cap plate and the terminal plate, and a material of the second insulating member is different from a material of the first insulating member.

Because the second insulating member is additionally disposed at the outer side of the first insulating member, it may prevent or substantially prevent the introduction of foreign matter between the cap plate and the terminal plate. Further, even if the terminal plate becomes deformed due to external impacts, the second insulating member may prevent a short circuit between the cap plate and the deformed terminal plate.

In an embodiment, the second insulating member may be in contact with an outer end of the first insulating member.

In an embodiment, the terminal plate may include: a head portion; and a protruding portion extending downward from the head portion, and inserted into the through-hole of the cap plate.

In an embodiment, an outer diameter of the first insulating member may be smaller than a diameter of the head portion. In other words, the first insulating member may be layered between the head portion of the terminal plate and the cap plate, and the head portion may completely cover the (upper) surface of the first insulating member.

In an embodiment, the second insulating member may be located between the cap plate and the head portion. In other words, the second insulating member may be layered between the head portion of the terminal plate and the cap plate, and the head portion may completely cover the (upper) surface of the second insulating member and the (upper) surface of the first insulating member.

In an embodiment, a thickness of the second insulating member may be the same as a thickness of the first insulating member. In other words, the first insulating member and the second insulating member may be layered between the head portion of the terminal plate and the cap plate, both the first insulating member and the second insulating member may be directly disposed on the cap plate and adjacent to each other (i.e. the first insulating member and the second insulating member do not overlap), wherein the thickness of the first insulating member and second insulating member is the same.

In an embodiment, the cap assembly may further include a third insulating member connected to one end of the second insulating member. Another end of the second insulating member may be connected to the first insulating member. In addition, a vertical level of an upper surface of the third insulating member may be higher than a vertical level of an upper surface of the second insulating member. In other words, the cap assembly may further include a third insulating member directly disposed on the cap plate and contacting one end of the second insulating member. The end of the second insulating member may be a side surface of second insulating member which does not contact the upper surface of the cap plate and the lower surface of the head portion of the terminal plate. The third insulating member may additionally contact at least a portion of an outer side surface of the head portion of the terminal plate. The outer side surface of the head portion may be a surface of the head portion which does not contact the upper surface of the first insulating member and is not the upper surface of the head portion. That is, the outer side surface of the head portion may be perpendicular to the lower surface of the head portion, which contacts the first insulating member.

In an embodiment, the third insulating member may be in contact with at least a portion of an outer side surface of the head portion.

In an embodiment, an outer diameter of the first insulating member may be the same as a diameter of the head portion. In other words, the first insulating member may be layered between the head portion of the terminal plate and the cap plate, and the head portion may completely cover the (upper) surface of the first insulating member, and the second insulating member is directly disposed on the cap plate, the second insulating contacting a side surface of the first the insulating member and may contact at least a portion of an outer side surface of the head portion of the terminal plate.

In an embodiment, a thickness of the second insulating member may be greater than a thickness of the first insulating member.

In an embodiment, a vertical level of an upper surface of the second insulating member may be lower than a vertical level of an upper surface of the head portion.

The material of the second insulating member is different from a material of the first insulating member. The material of the second insulating member may be an electrically insulating material, which is different from the electrically insulating material of the first insulating member.

In an embodiment, the second insulating member may include an elastic material.

In an embodiment, the first insulating member and the second insulating member may be bonded together through an insulating bonding material.

In an embodiment, the cap assembly may further include a fourth insulating member on a lower surface of the cap plate.

In a preferred embodiment, the secondary battery may be a coin cell, with the case having a cylindrical shape and a diameter of 9 mm to 14 mm, and having a height ranging from 4.5 mm to 6 mm.

According to a second aspect of the present disclosure, a secondary battery includes: an electrode assembly including a positive electrode, a negative electrode, and a separator wound between the positive electrode and the negative electrode; a case having an opening at a first side, and accommodating the electrode assembly; and a cap assembly coupled to the first side of the case to seal the opening of the case. The cap assembly includes: a cap plate seated on and coupled to the first side to cover the opening of the case accommodating the electrode assembly, the cap plate having a through-hole therethrough; a terminal plate electrically connected to the electrode assembly, and inserted into the through-hole of the cap plate; a first insulating member between the cap plate and the terminal plate to provide electrical insulation between the cap plate and the terminal plate; and a second insulating member at an outside of the first insulating member to provide electrical insulation between the cap plate and the terminal plate.

In an embodiment, the terminal plate may include: a head portion; and a protruding portion extending downward from the head portion, and inserted into the through-hole of the cap plate.

In an embodiment, an outer diameter of the first insulating member may be smaller than a diameter of the head portion.

In an embodiment, the second insulating member may be located between the cap plate and the terminal plate.

In an embodiment, a thickness of the second insulating member may be the same as a thickness of the first insulating member.

According to one or more embodiments of the present disclosure, a cap assembly for a secondary battery includes: a cap plate seated on and coupled to an open end of a case accommodating an electrode assembly, the cap plate having a through-hole therethrough; a terminal plate electrically connected to the electrode assembly, and inserted into the through-hole of the cap plate; a first insulating member between the cap plate and the terminal plate to provide electrical insulation between the cap plate and the terminal plate; and a second insulating member at an outside of the first insulating member to provide electrical insulation between the cap plate and the terminal plate.

The cap assembly for a secondary battery may be further specified as described above in context of the embodiments of the first aspect of the disclosure.

According to some aspects and embodiments of the present disclosure, the second insulating member may be additionally disposed at the outside of the first insulating member, and thus, may prevent or substantially prevent the introduction of foreign matter between the cap plate and the terminal plate. Further, even if the terminal plate becomes deformed due to external impacts, the second insulating member may prevent a short circuit between the cap plate and the deformed terminal plate.

According to some embodiments of the present disclosure, the second and third insulating members may be additionally disposed at the outside of the first insulating member, thereby preventing or substantially preventing the introduction of foreign matter between the cap plate and the terminal plate. Further, the third insulating member may prevent or substantially prevent the deformation of the terminal plate that may be caused by external impacts, thereby preventing a short circuit between the cap plate and the terminal plate.

According to some embodiments of the present disclosure, the second insulating member may be additionally disposed at the outside of the first insulating member, and thus, may prevent or substantially prevent the first insulating member from expanding outward due to external impacts. Further, the second insulating member may prevent or substantially prevent the deformation of the terminal plate that may be caused by external impacts, thereby preventing a short circuit between the cap plate and the terminal plate.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
- FIG. 1: illustrates a cross-sectional view of an example of a secondary battery according to an embodiment of the present disclosure.
- FIG. 2: illustrates an example of a cap assembly according to an embodiment of the present disclosure.
- FIG. 3: illustrates an example of a cap assembly according to an embodiment of the present disclosure.
- FIG. 4: illustrates an example of a cap assembly according to an embodiment of the present disclosure.
- FIG. 5: illustrates an example of a cap assembly according to an embodiment of the present disclosure.
- FIG. 6: illustrates an example of a cap assembly according to an embodiment of the present disclosure.
- FIG. 7: illustrates an example of a cap assembly according to an embodiment of the present disclosure.
- FIG. 8: illustrates a flowchart of an example of a method for manufacturing a secondary battery according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the figures, the illustrated sizes (e.g., dimensions) and relative sizes (e.g., dimensions) of layers and regions may be exaggerated for convenience of illustration. In other words, the present disclosure is not limited to the sizes (e.g., dimensions) shown in the figures. Furthermore, throughout the specification, like reference numerals may refer to like parts

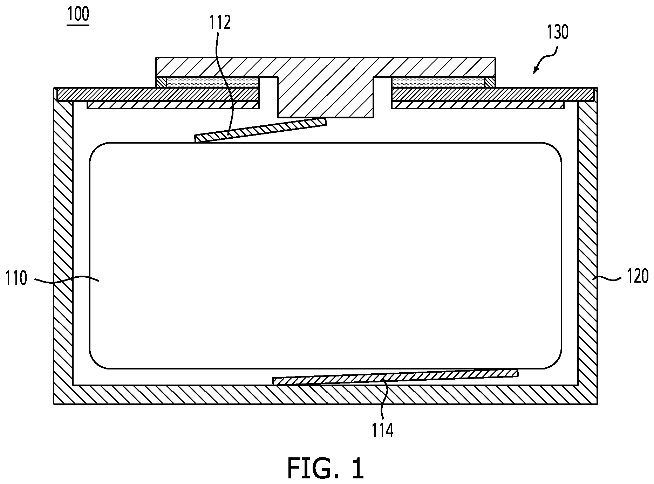

FIG. 1 illustrates a cross-sectional view of an example of a secondary battery 100 according to an embodiment of the present disclosure. FIG. 1 may illustrate a cross-sectional view of a structure of the secondary battery 100 having a cylindrical or substantially cylindrical shape that is cut in a height direction along a line passing through a center of the secondary battery 100.

Referring to FIG. 1, the secondary battery 100 may include an electrode assembly 110, a case 120, and a cap assembly 130. The secondary battery 100 may be a coin cell (e.g., a coin-type secondary battery) or a button cell (e.g., a button-type secondary battery). However, the present disclosure is not limited thereto, and the secondary battery 100 may be a cylindrical secondary battery or a pin-type secondary battery. For example, the secondary battery 100 may have a columnar shape. However, the shape of the secondary battery 100 is not limited thereto, and the secondary battery 100 may have a cylindrical shape, a prismatic shape, a pouch shape, or the like.

The coin cell or button cell is a battery in the form of a thin coin or button and may refer to a battery having a ratio of height to diameter (height/diameter) of 1 or less but is not limited thereto. Because the coin cell or button cell is generally cylindrical, the cross section in the horizontal direction is generally circular. However, the cross section in the horizontal direction is not limited thereto and may have an elliptical or polygonal shape. The diameter may refer to a maximum distance in the horizontal direction of the battery, and the height may refer to a maximum distance in the vertical direction of the battery (e.g., distance from the flat bottom surface to the flat top surface of the battery).

The case 120 may have an opening formed at an upper portion thereof to accommodate the electrode assembly 110. After the electrode assembly 110 is inserted through the opening of the case 120, an electrode terminal of the cap assembly 130 may be electrically connected to a positive electrode tab or a negative electrode tab of the electrode assembly 110. Subsequently, the cap assembly 130 may be tightly joined to an end of the case 120 to cover the opening through a suitable method such as welding, thereby sealing the opening of the case 120.

The electrode assembly 110 may include a positive electrode, a negative electrode, and a separator. In more detail, the electrode assembly 110 may be configured by winding the positive electrode, the negative electrode, and the separator interposed between the positive electrode and the negative electrode. The electrode assembly 110 may be wound to have a winding core, and may include a through-hole in the winding core.

The positive electrode may include a positive electrode substrate, and a positive electrode active material layer formed on the positive electrode substrate. A positive electrode tab 112 may extend outward from a positive electrode uncoated portion of the positive electrode substrate, which is a region where the positive electrode active material layer is not formed. The positive electrode tab 112 may be electrically connected to the cap assembly 130.

The negative electrode may include a negative electrode substrate, and a negative electrode active material layer formed on the negative electrode substrate. A negative electrode tab 114 may extend outward from a negative electrode uncoated portion of the negative electrode substrate, which is a region where the negative electrode active material layer is not formed. The negative electrode tab 114 may be electrically connected to the case 120. The positive electrode tab 112 and the negative electrode tab 114 may extend in opposite directions from each other from the positive electrode and the negative electrode, respectively.

In an embodiment, each of the positive electrode tab 112 and the negative electrode tab 114 may be covered with a cover tape. The cover tape may include an insulating material. The insulating material may provide an electrical insulation to prevent a current from passing therethrough. The cover tape may effectively prevent a short circuit from occurring at the positive electrode tab 112 and the negative electrode tab 114.

The positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (AI) but is not limited thereto.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

Referring to FIG. 1, the positive electrode tab 112 of the positive electrode may be disposed on one side of the electrode assembly 110. In some embodiments, the negative electrode tab 114 of the negative electrode may be disposed on the opposite side of the electrode assembly 110. However, the present disclosure is not limited thereto. For example, both the positive electrode tab and the negative electrode tab may be disposed on the same side of the electrode assembly 110.

The case 120 accommodates the electrode assembly 110 and, together with the cap assembly, forms the external appearance of the secondary battery. The case 120 may have a substantially cylindrical body portion and a bottom portion connected to one side (e.g., to one end) of the body portion. Further, the case 120 may be made of a metal, such as aluminum, aluminum alloy, or nickel-plated steel, a laminated film, or plastic (e.g., in a pouch-type embodiment).

The case 120 may have a diameter ranging from 9 mm to 14 mm, and a height ranging from 4.5 mm to 6 mm. However, the shape and the dimension of the case 120 are not limited thereto, and the case 120 may be formed in various suitable shapes, such as, but not limited to, a cylindrical shape, a pouch shape, or the like.

The case 120 may accommodate the electrode assembly 110. In more detail, the electrode assembly 110 may be inserted through the opening formed at one side of the case 120. Further, an electrode of the electrode assembly 110, once accommodated in the case 120, may be electrically connected to a terminal plate of the cap assembly 130. Subsequently, the opening of the case 120 may be sealed by the cap assembly 130. In other words, the cap assembly 130 may be coupled to one side of the case 120.

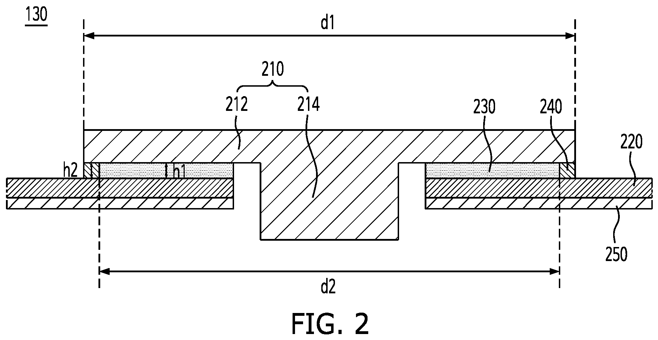

In an embodiment, the cap assembly 130 may be seated on and coupled to the opening of the case in which the electrode assembly is accommodated. The cap assembly 130 may include a cap plate having a through-hole, a terminal plate electrically connected to the electrode assembly and inserted into the through-hole of the cap plate, a first insulating member disposed between the cap plate and the terminal plate to insulate the cap plate from the terminal plate, and a second insulating member disposed at the outer side of the first insulating member to provide additional insulation between the cap plate and the terminal plate. The outer side of an element, e.g. the outer side of the first insulating member, may be understood herein as the side (e.g. side surface) facing away from the through-hole of the cap plate. Some example embodiments of the cap assembly 130 will be described in more detail below with reference to FIGS. 2 to 7.

FIG. 2 illustrates an example of the cap assembly 130 according to an embodiment of the present disclosure.

In an embodiment, the cap assembly 130 may include a terminal plate 210, a cap plate 220, a first insulating member 230 disposed between the terminal plate 210 and the cap plate 220 to provide electrical insulation between the terminal plate 210 and the cap plate 220, and a second insulating member 240 disposed between the terminal plate 210 and the cap plate 220 to provide additional electrical insulation between the terminal plate 210 and the cap plate 220. The cap plate 220 may be seated on and coupled to the opening of the case (e.g., the case 120 shown in FIG. 1) in which the electrode assembly is accommodated. Further, the cap plate 220 may have a through-hole formed therethrough. The cap plate 220 may have a first polarity (e.g., negative), and may be made of, but is not limited to, stainless steel.

In an embodiment, the terminal plate 210 may be electrically connected to the electrode assembly, and may be inserted into the through-hole of the cap plate 220. In more detail, the terminal plate 210 may include a head portion 212 that is disposed outside the cap plate 220 (e.g., the head portion 212 is disposed on or above an upper surface of the cap plate 220), and a protruding portion 214 that is formed to extend downward from the head portion 212 and inserted into the through-hole of the cap plate 220. The terminal plate 210 may have a second polarity (e.g., positive), and may be made of, but is not limited to, aluminum.

In an embodiment, the first insulating member 230 may be disposed (e.g. layered or stacked) between the cap plate 220 and the terminal plate 210. The first insulating member 230 may be in the form of a circular plate with a through-hole formed at the center thereof. Accordingly, the protruding portion 214 of the terminal plate 210 may be inserted into the through-hole of the first insulating member 230.

In an embodiment, the second insulating member 240 may be disposed at the outer side (e.g. the outside) of the first insulating member 230. In other words, the second insulating member 240 may be disposed on the cap plate and adjacent to the first insulating member 230 and may contact the outer side surface of the first insulating member 230. In more detail, the second insulating member 240 may be disposed at the outside of the first insulating member 230 in a radial direction of the first insulating member 230. The second insulating member 240 may be disposed to be in contact with an outer end (e.g., an outer side surface) of the first insulating member 230. The second insulating member 240 may be in the form of a ring. Thus, the first insulating member 230 may be disposed at the inside of the second insulating member 240.

In an embodiment, an outer diameter d2 of the first insulating member 230 may be smaller than a diameter d1 of the head portion 212. In this case, the second insulating member 240 may be disposed between the cap plate 220 and the terminal plate 210. Further, a thickness (e.g., a height) h2 of the second insulating member 240 may be the same or substantially the same as a thickness (e.g., a height) h1 of the first insulating member 230.

The material of the second insulating member 240 is different from that of the first insulating member 230. The material of the second insulating member 240 may be an electrically insulating material, which is different from the electrically insulating material of the first insulating member 230. For example, the material of the first insulating member 230 may include, but is not limited to, polypropylene (PP), while the material of the second insulating member 240 may include, but is not limited to, a rubber or polycarbonate ester (PCE). Additionally, the second insulating member 240 may include an elastic material. After the first insulating member 230 is disposed between the cap plate 220 and the terminal plate 210, the second insulating member 240 may be disposed at the outer side of the first insulating member 230 between the cap plate 220 and the terminal plate 210.

In an embodiment, a third insulating member 250 may be disposed on a lower surface of the cap plate 220. The third insulating member 250 may serve to prevent a short circuit between the cap plate 220 and the electrode assembly accommodated in the case. A material of the third insulating member 250 may be different from the materials of the first and second insulating members 230 and 240.Further, a material of the third insulating member 250 may include polyethylene terephthalate (PET), but the present disclosure is not limited thereto.

The second insulating member 240, being additionally disposed at the outside of the first insulating member 230, may prevent the introduction of foreign matter between the cap plate 220 and the terminal plate 210. Further, even if the terminal plate 210 becomes deformed due to external impacts, the second insulating member 240 may prevent a short circuit between the cap plate 220 and the deformed terminal plate 210.

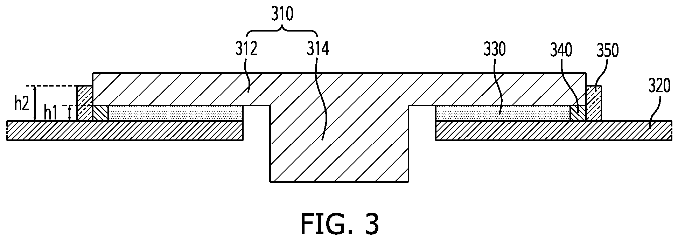

FIG. 3 illustrates an example of a cap assembly according to an embodiment of the present disclosure.

In an embodiment, a cap assembly may include a terminal plate 310, a cap plate 320, a first insulating member 330 disposed to provide electrical insulation between the terminal plate 310 and the cap plate 320, and a second insulating member 340 disposed to provide additional electrical insulation between the terminal plate 310 and the cap plate 320. The cap plate 320 may be seated on and coupled to an opening of a case in which an electrode assembly is accommodated. Further, the cap plate 320 may have a through-hole. Additionally, the terminal plate 310 may be electrically connected to the electrode assembly, and may be inserted into the through-hole of the cap plate 320.

In an embodiment, the terminal plate 310 may include a head portion 312 that is disposed outside the cap plate 320 (e.g., the head portion 312 is disposed on or above an upper surface of the cap plate 320), and a protruding portion 314 that is formed to extend downward from the head portion 312 and inserted into the through-hole of the cap plate 320. In this case, the first insulating member 330 may be disposed between the cap plate 320 and the head portion 312. An outer diameter of the first insulating member 330 may be smaller than a diameter of the head portion 312. Further, the second insulating member 340 may be positioned to be in contact with an outer end (e.g., an outer side surface) of the first insulating member 330. The second insulating member 340 may be disposed between the cap plate 320 and the head portion 312.

In an embodiment, the cap assembly may further include a third insulating member 350 connected to one end (e.g., an outer end) of the second insulating member 340. The third insulating member 350 may insulate the cap plate 320 from the terminal plate 310. The other end (e.g., an inner end) of the second insulating member 340 may be connected to the first insulating member 330. In other words, the second insulating member 340 may be disposed between the first insulating member 330 and the third insulating member 350.

In an embodiment, a material of the second insulating member 340 may be different from that of the first insulating member 330. Further, the material of the second insulating member 340 may be the same as that of the third insulating member 350. In some embodiments, the materials of the first insulating member 330, the second insulating member 340, and the third insulating member 350 may be different from one another.

In an embodiment, a vertical level (e.g., a height) h2 of an upper surface of the third insulating member 350 may be higher than a vertical level (e.g., a height) h1 of an upper surface of the second insulating member 340. Further, a thickness of the second insulating member 340 may be the same as a thickness of the first insulating member 330. In other words, the vertical level h2 of the upper surface of the third insulating member 350 may be higher than a vertical level of an upper surface of the first insulating member 330.

In an embodiment, the third insulating member 350 may be disposed to be in contact with at least a portion of an outer side surface of the head portion 312. The vertical level h2 of the upper surface of the third insulating member 350 may be lower than a vertical level of an upper surface of the head portion 312, but the present disclosure is not limited thereto. For example, the vertical level h2 of the upper surface of the third insulating member 350 may be the same or substantially the same as the vertical level of the upper surface of the head portion 312.

In FIG. 3, the second insulating member 340 and the third insulating member 350 may be shown as separate components from each other, but the present disclosure is not limited thereto. For example, the second insulating member 340 and the third insulating member 350 may be integrally formed with each other.

The second and third insulating members 340 and 350 are additionally disposed at the outside of the first insulating member 330, thereby preventing or substantially preventing the introduction of foreign matter between the cap plate 320 and the terminal plate 310. Further, the third insulating member 350 may prevent or substantially prevent a deformation of the terminal plate 310 that may be caused by external impacts, thereby preventing a short circuit between the cap plate 320 and the terminal plate 310.

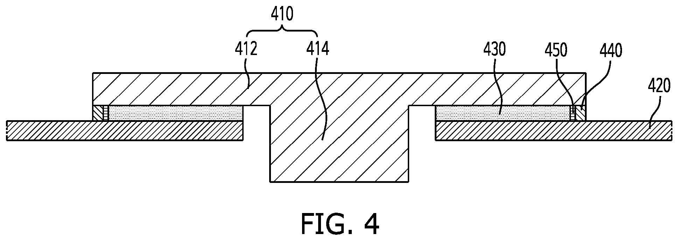

FIG. 4 illustrates an example of a cap assembly according to an embodiment of the present disclosure.

In an embodiment, a cap assembly may include a terminal plate 410, a cap plate 420, a first insulating member 430 disposed to provide electrical insulation between the terminal plate 410 and the cap plate 420, and a second insulating member 440 disposed to provide additional electrical insulation between the terminal plate 410 and the cap plate 420. The cap plate 420 may be seated on and coupled to an opening of a case in which an electrode assembly is accommodated. Further, the cap plate 420 may have a through-hole. Additionally, the terminal plate 410 may be electrically connected to the electrode assembly, and may be inserted into the through-hole of the cap plate 420.

In an embodiment, the terminal plate 410 may include a head portion 412 that is disposed outside the cap plate 420 (e.g., the head portion 412 is disposed on or above an upper surface of the cap plate 420), and a protruding portion 414 that is formed to extend downward from the head portion 412 and inserted into the through-hole of the cap plate 420. In this case, the first insulating member 430 may be disposed between the cap plate 420 and the head portion 412. An outer diameter of the first insulating member 430 may be smaller than a diameter of the head portion 412. Further, the second insulating member 440 may be positioned to be in contact with an outer end (e.g., an outer side surface) of the first insulating member 430. The second insulating member 440 may be disposed between the cap plate 420 and the head portion 412.

In an embodiment, the first insulating member 430 and the second insulating member 440 may be bonded together through an insulating bonding material 450. In other words, the insulating bonding material 450 may be provided between the first insulating member 430 and the second insulating member 440. This insulating bonding material 450 may not only bond the first insulating member 430 and the second insulating member 440 together, but may also provide electrical insulation between the cap plate 420 and the terminal plate 410.

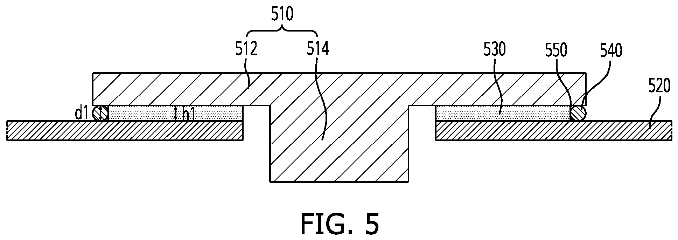

FIG. 5 illustrates an example of a cap assembly according to an embodiment of the present disclosure.

In an embodiment, a cap assembly may include a terminal plate 510, a cap plate 520, a first insulating member 530 disposed to provide electrical insulation between the terminal plate 510 and the cap plate 520, and a second insulating member 540 disposed to provide additional electrical insulation between the terminal plate 510 and the cap plate 520. The cap plate 520 may be seated on and coupled to an opening of a case in which an electrode assembly is accommodated. Further, the cap plate 520 may have a through-hole. Additionally, the terminal plate 510 may be electrically connected to the electrode assembly, and may be inserted into the through-hole of the cap plate 520.

In an embodiment, the terminal plate 510 may include a head portion 512 that is disposed outside the cap plate 520 (e.g., the head portion 512 is disposed on or above an upper surface of the cap plate 520), and a protruding portion 514 that is formed to extend downward from the head portion 512 and inserted into the through-hole of the cap plate 520. In this case, the first insulating member 530 may be disposed between the cap plate 520 and the head portion 512. An outer diameter of the first insulating member 530 may be smaller than a diameter of the head portion 512. Additionally, the second insulating member 540 may be positioned to be in contact with an outer end (e.g., an outer side surface) of the first insulating member 530. The second insulating member 540 may be disposed between the cap plate 520 and the head portion 512.

In an embodiment, a cross-section of the second insulating member 540 may be circular. A diameter d1 of the cross-section of the second insulating member 540 may be equal to or substantially equal to a thickness h1 of the first insulating member 530. For example, the second insulating member 540 may be in the form of a rubber ring, but the present disclosure is not limited thereto.

In an embodiment, the first insulating member 530 and the second insulating member 540 may be bonded to each other through an insulating bonding material 550. In a case where the cross-section of the second insulating member 540 is circular, a gap may be formed between the first insulating member 530 and the second insulating member 540. The insulating bonding material 550 may be provided to fill the gap between the first insulating member 530 and the second insulating member 540. The insulating bonding material 550 may serve to not only bond the first insulating member 530 and the second insulating member 540 together, but may also provide electrical insulation between the cap plate 520 and the terminal plate 510.

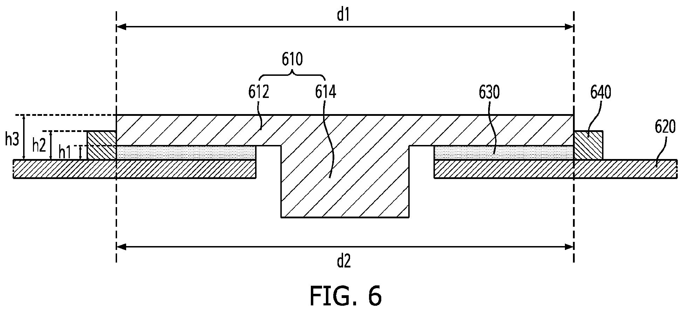

FIG. 6 illustrates an example of a cap assembly according to an embodiment of the present disclosure.

In an embodiment, a cap assembly may include a terminal plate 610, a cap plate 620, a first insulating member 630 disposed to provide electrical insulation between the terminal plate 610 and the cap plate 620, and a second insulating member 640 disposed to provide electrical insulation between the terminal plate 610 and the cap plate 620. The cap plate 620 may be seated on and coupled to an opening of a case in which an electrode assembly is accommodated. Further, the cap plate 620 may have a through-hole. Additionally, the terminal plate 610 may be electrically connected to the electrode assembly, and may be inserted into the through-hole of the cap plate 620.

In an embodiment, the terminal plate 610 may include a head portion 612 that is disposed outside the cap plate 620 (e.g., the head portion 612 is disposed on or above an upper surface of the cap plate 620), and a protruding portion 614 that is formed to extend downward from the head portion 612 and inserted into the through-hole of the cap plate 620. In this case, the first insulating member 630 may be disposed between the cap plate 620 and the head portion 612. An outer diameter d2 of the first insulating member 630 and a diameter d1 of the head portion 612 may be the same or substantially the same as each other. Additionally, the second insulating member 640 may be disposed to be in contact with an outer end (e.g., an outer side surface) of the first insulating member 630.

In an embodiment, a thickness h2 of the second insulating member 640 may be greater than a thickness h1 of the first insulating member 630. Additionally, a vertical level h2 of an upper surface of the second insulating member 640 may be lower than a vertical level h3 of an upper surface of the head portion 612.

The second insulating member 640, being additionally disposed at the outside of the first insulating member 630, may prevent or substantially prevent the first insulating member 630 from expanding outward due to external impacts. Further, the second insulating member 640 may prevent or substantially prevent a deformation of the terminal plate 610 that may be caused by external impacts, thereby preventing a short circuit between the cap plate 620 and the terminal plate 610.

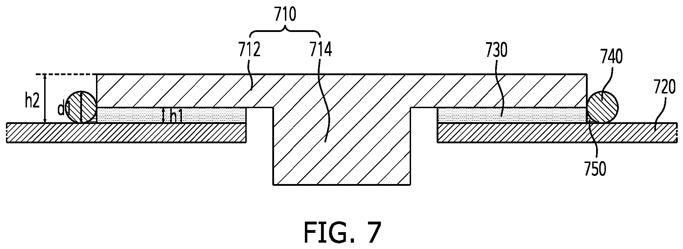

FIG. 7 illustrates an example of a cap assembly according to an embodiment of the present disclosure.

In an embodiment, a cap assembly may include a terminal plate 710, a cap plate 720, a first insulating member 730 disposed to provide electrical insulation between the terminal plate 710 and the cap plate 720, and a second insulating member 740 disposed to provide electrical insulation between the terminal plate 710 and the cap plate 720. The cap plate 720 is seated on and coupled to an opening of a case in which the electrode assembly is accommodated. Further, the cap plate 720 may include a through-hole. Additionally, the terminal plate 710 may be electrically connected to the electrode assembly, and may be inserted into the through-hole of the cap plate 720.

In an embodiment, the terminal plate 710 may include a head portion 712 disposed outside the cap plate 720 (e.g., the head portion 712 is disposed on or above an upper surface of the cap plate 720), and a protruding portion 714 that is formed to extend downward from the head portion 712 and inserted into the through-hole of the cap plate 720. In this case, the first insulating member 730 may be disposed between the cap plate 720 and the head portion 712. An outer diameter of the first insulating member 730 may be the same or substantially the same as a diameter of the head portion 712. Additionally, the second insulating member 740 may be disposed to be in contact with an outer end (e.g., an outer side surface) of the first insulating member 730.

In an embodiment, a cross-section of the second insulating member 740 may be circular. A diameter d1 of the cross-section of the second insulating member 740 may be greater than a thickness h1 of the first insulating member 730. Further, the diameter d1 of the cross-section of the second insulating member 740 may be less than a vertical level h2 of an upper surface of the head portion 712 (e.g., a distance from an upper surface of the cap plate 720 to the upper surface of the head portion 712). For example, the second insulating member 740 may be in the form of a rubber ring, but the present disclosure is not limited thereto.

In an embodiment, the first insulating member 730 and the second insulating member 740 may be bonded to each other through an insulating bonding material 750. In a case where the cross-section of the second insulating member 740 is circular, a gap may be formed between the first insulating member 730 and the second insulating member 740. The insulating bonding material 750 may be provided to fill the gap between the first insulating member 730 and the second insulating member 740. The insulating bonding material 750 may serve to not only bond the first insulating member 730 and the second insulating member 740 to each other, but may also provide electrical insulation between the cap plate 720 and terminal plate 710.

In the examples of the embodiments described above with reference to FIGS. 3 to 7, for convenience of illustration, the insulating member (e.g., the insulating member 250 shown in FIG. 2) disposed on the lower surface of the cap plate is not shown. However, the present disclosure is not limited thereto, and each of the cap assemblies described above with reference to FIGS. 3 to 7 may also include the insulating member that is disposed on the lower surface of the cap plate.

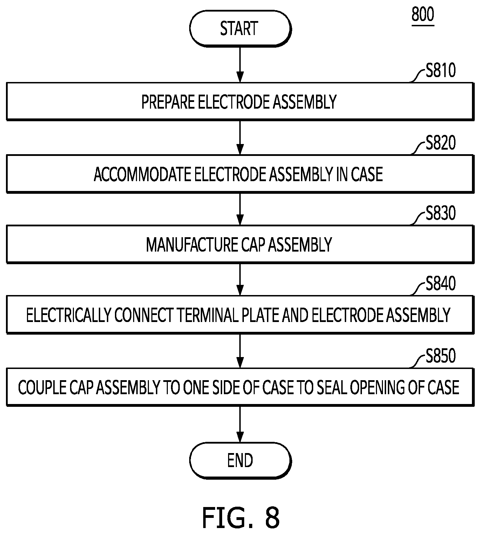

FIG. 8 illustrates a flowchart of an example of a method 800 for manufacturing a secondary battery according to an embodiment of the present disclosure.

In an embodiment, the method 800 may include preparing an electrode assembly (S810) by winding a first electrode, a second electrode, and a separator interposed between the first electrode and the second electrode. The electrode assembly may be accommodated in a case (S820) having an opening formed at one side of the case.

A cap assembly may be manufactured (S830). The cap assembly may include a cap plate having a through-hole that is seated on and coupled to the opening of the case accommodating the electrode assembly, and a terminal plate that is electrically connected to the electrode assembly and inserted into the through-hole of the cap plate. The terminal plate may include (e.g., may be made of) one or more metallic materials, such as aluminum, an aluminum alloy, a nickel-plated steel, stainless steel (SUS), or the like, but the present disclosure is not limited thereto. Further, the terminal plate may include a head portion, and a protruding portion formed to extend downward from the head portion and inserted into the through-hole of the cap plate.

In an embodiment, the cap assembly may further include a first insulating member disposed between the cap plate and the terminal plate to provide electrical insulation between the cap plate and the terminal plate, and a second insulating member disposed at the outside of the first insulating member to provide electrical insulation between the cap plate and the terminal plate. The second insulating member may be disposed to be in contact with an outer end of the first insulating member. An outer diameter of the first insulating member may be smaller than a diameter of the head portion of the terminal plate. In this case, the second insulating member may be disposed between the cap plate and the terminal plate. Further, a thickness of the second insulating member may be the same or substantially the same as a thickness of the first insulating member.

The terminal plate may be electrically connected to the electrode assembly (S840). For example, the terminal plate may be connected to a positive tab or a negative tab of the electrode assembly by welding. Further, the cap assembly may be coupled to one side of the case to seal the opening of the case (S850). For example, the outer circumference of the cap assembly may be welded to the terminal of the opening of the case.

In an embodiment, the cap assembly may further include a third insulating member connected to one end of the second insulating member. Another end (e.g., an opposite end) of the second insulating member may be connected to the first insulating member. Additionally, a vertical level of an upper surface of the third insulating member may be higher than a vertical level of an upper surface of the second insulating member. Furthermore, the third insulating member may be disposed to be in contact with at least a portion of an outer side surface of the head portion.

In an embodiment, the outer diameter of the first insulating member may be the same or substantially the same as the diameter of the head portion. In this case, the thickness of the second insulating member may be greater than the thickness of the first insulating member. Additionally, the vertical level of the upper surface of the second insulating member may be lower than a vertical level of an upper surface of the head portion.

In an embodiment, a material of the second insulating member may be different from a material of the first insulating member. Further, the material of the second insulating member may include an elastic material. Additionally, the first and second insulating members may be bonded together through an insulating bonding material.

In an embodiment, the cap assembly may further include a fourth insulating member disposed on a lower surface of the cap plate. The fourth insulating member may be disposed between the electrode assembly and the cap plate to provide electrical insulation between the electrode assembly and the cap plate.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### Description of Some Reference Symbols

100: secondary battery
110: electrode assembly
112: positive electrode tab
114: negative electrode tab
120: case
130: cap assembly

## Claims

1. A secondary battery (100) comprising:
a case (120) accommodating an electrode assembly (110), and
a cap assembly (130), wherein the cap assembly (130) comprising:
a cap plate (220, 320, 420, 520, 620, 720) seated on and coupled to an open end of the case (120), the cap plate (220, 320, 420, 520, 620, 720) having a through-hole therethrough;
a terminal plate (210, 310, 410, 510, 610, 710) electrically connected to the electrode assembly (110), and inserted into the through-hole of the cap plate (220, 320, 420, 520, 620, 720);
a first insulating member (230, 330, 430, 530, 630, 730) between the cap plate (220, 320, 420, 520, 620, 720) and the terminal plate (210, 310, 410, 510, 610, 710) to provide electrical insulation between the cap plate (220, 320, 420, 520, 620, 720) and the terminal plate (210, 310, 410, 510, 610, 710); and
a second insulating member (240, 340, 440, 540, 640, 740) at an outer side of the first insulating member (230, 330, 430, 530, 630, 730) to provide electrical insulation between the cap plate (220, 320, 420, 520, 620, 720) and the terminal plate (210, 310, 410, 510, 610, 710),
wherein a material of the second insulating member (240, 340, 440, 540, 640, 740) is different from a material of the first insulating member (230, 330, 430, 530, 630, 730).

2. The secondary battery (100) as claimed in claim 1, wherein the second insulating member (240, 340, 440, 540, 640, 740) is in contact with an outer end of the first insulating member (230, 330, 430, 530, 630, 730).

3. The secondary battery (100) as claimed in one of claims 1 or 2, wherein the terminal plate (210, 310, 410, 510, 610, 710) comprises:
a head portion (212, 312, 412, 512, 612, 712); and
a protruding portion (214, 314, 414, 514, 614, 714) extending downward from the head portion (212, 312, 412, 512, 612, 712), and inserted into the through-hole of the cap plate (220, 320, 420, 520, 620, 720).

4. The secondary battery (100) as claimed in claim 3, wherein an outer diameter of the first insulating member (230, 330, 430, 530, 630, 730) is smaller than a diameter of the head portion (212, 312, 412, 512, 612, 712).

5. The secondary battery (100) as claimed in one of claims 3 or 4, wherein the second insulating member (240, 340, 440, 540, 640, 740) is located between the cap plate (220, 320, 420, 520, 620, 720) and the head portion (212, 312, 412, 512, 612, 712).

6. The secondary battery (100) as claimed in at least one of claims 3 to 5, wherein a thickness of the second insulating member (240, 340, 440, 540, 640, 740) is the same as a thickness of the first insulating member (230, 330, 430, 530, 630, 730).

7. The secondary battery (100) as claimed in at least one of claims 4 to 6, further comprising a third insulating member (250, 350) connected to one end of the second insulating member (240, 340, 440, 540, 640, 740), and
wherein another end of the second insulating member (240, 340, 440, 540, 640, 740) is connected to the first insulating member (230, 330, 430, 530, 630, 730).

8. The secondary battery (100) as claimed in claim 7, wherein the third insulating member (250, 350) is in contact with at least a portion of an outer side surface of the head portion (212, 312, 412, 512, 612, 712).

9. The secondary battery (100) as claimed in claim 3, wherein an outer diameter of the first insulating member (230, 330, 430, 530, 630, 730) is the same as a diameter of the head portion (212, 312, 412, 512, 612, 712).

10. The secondary battery (100) as claimed in claim 9, wherein a thickness of the second insulating member (240, 340, 440, 540, 640, 740) is greater than a thickness of the first insulating member (230, 330, 430, 530, 630, 730).

11. The secondary battery (100) as claimed in claim 3 or 9 or 10, wherein a vertical level of an upper surface of the second insulating member (240, 340, 440, 540, 640, 740) is lower than a vertical level of an upper surface of the head portion (212, 312, 412, 512, 612, 712).

12. The secondary battery (100) as claimed in one of the preceding claims, wherein the second insulating member (240, 340, 440, 540, 640, 740) comprises an elastic material.

13. The secondary battery (100) as claimed in one of the preceding claims, wherein the first insulating member (230, 330, 430, 530, 630, 730) and the second insulating member (240, 340, 440, 540, 640, 740) are bonded together through an insulating bonding material (450, 550, 750).

14. The secondary battery (100) as claimed in one of the preceding claims, further comprising a fourth insulating member on a lower surface of the cap plate (220, 320, 420, 520, 620, 720).

15. The secondary battery (100) as claimed in one of the preceding claims, wherein the secondary battery (100) is a coin cell, with the case (120) having a cylindrical shape and a diameter of 9 mm to 14 mm, and having a height ranging from 4.5 mm to 6 mm.

## Amended claims

### Amended claims in accordance with Rule 137(2) EPC.

1. A secondary battery (100) comprising:
a case (120) accommodating an electrode assembly (110), and
a cap assembly (130), wherein the cap assembly (130) comprising:
a cap plate (220, 320, 420, 520, 620, 720) seated on and coupled to an open end of the case (120), the cap plate (220, 320, 420, 520, 620, 720) having a through-hole therethrough;
a terminal plate (210, 310, 410, 510, 610, 710) electrically connected to the electrode assembly (110), and inserted into the through-hole of the cap plate (220, 320, 420, 520, 620, 720);
a first insulating member (230, 330, 430, 530, 630, 730) between the cap plate (220, 320, 420, 520, 620, 720) and the terminal plate (210, 310, 410, 510, 610, 710) to provide electrical insulation between the cap plate (220, 320, 420, 520, 620, 720) and the terminal plate (210, 310, 410, 510, 610, 710); and
a second insulating member (240, 340, 440, 540, 640, 740) at an outer side of the first insulating member (230, 330, 430, 530, 630, 730) to provide electrical insulation between the cap plate (220, 320, 420, 520, 620, 720) and the terminal plate (210, 310, 410, 510, 610, 710),
wherein a material of the second insulating member (240, 340, 440, 540, 640, 740) is different from a material of the first insulating member (230, 330, 430, 530, 630, 730),
wherein the first insulating member (230, 330, 430, 530, 630, 730) and the second insulating member (240, 340, 440, 540, 640, 740) are bonded together through an insulating bonding material (450, 550, 750).

2. The secondary battery (100) as claimed in claim 1, wherein the second insulating member (240, 340, 440, 540, 640, 740) is in contact with an outer end of the first insulating member (230, 330, 430, 530, 630, 730).

3. The secondary battery (100) as claimed in one of claims 1 or 2, wherein the terminal plate (210, 310, 410, 510, 610, 710) comprises:
a head portion (212, 312, 412, 512, 612, 712); and
a protruding portion (214, 314, 414, 514, 614, 714) extending downward from the head portion (212, 312, 412, 512, 612, 712), and inserted into the through-hole of the cap plate (220, 320, 420, 520, 620, 720).

4. The secondary battery (100) as claimed in claim 3, wherein an outer diameter of the first insulating member (230, 330, 430, 530, 630, 730) is smaller than a diameter of the head portion (212, 312, 412, 512, 612, 712).

5. The secondary battery (100) as claimed in one of claims 3 or 4, wherein the second insulating member (240, 340, 440, 540, 640, 740) is located between the cap plate (220, 320, 420, 520, 620, 720) and the head portion (212, 312, 412, 512, 612, 712).

6. The secondary battery (100) as claimed in at least one of claims 3 to 5, wherein a thickness of the second insulating member (240, 340, 440, 540, 640, 740) is the same as a thickness of the first insulating member (230, 330, 430, 530, 630, 730).

7. The secondary battery (100) as claimed in at least one of claims 4 to 6, further comprising a third insulating member (250, 350) connected to one end of the second insulating member (240, 340, 440, 540, 640, 740), and
wherein another end of the second insulating member (240, 340, 440, 540, 640, 740) is connected to the first insulating member (230, 330, 430, 530, 630, 730).

8. The secondary battery (100) as claimed in claim 7, wherein the third insulating member (250, 350) is in contact with at least a portion of an outer side surface of the head portion (212, 312, 412, 512, 612, 712).

9. The secondary battery (100) as claimed in claim 3, wherein an outer diameter of the first insulating member (230, 330, 430, 530, 630, 730) is the same as a diameter of the head portion (212, 312, 412, 512, 612, 712).

10. The secondary battery (100) as claimed in claim 9, wherein a thickness of the second insulating member (240, 340, 440, 540, 640, 740) is greater than a thickness of the first insulating member (230, 330, 430, 530, 630, 730).

11. The secondary battery (100) as claimed in claim 3 or 9 or 10, wherein a vertical level of an upper surface of the second insulating member (240, 340, 440, 540, 640, 740) is lower than a vertical level of an upper surface of the head portion (212, 312, 412, 512, 612, 712).

12. The secondary battery (100) as claimed in one of the preceding claims, wherein the second insulating member (240, 340, 440, 540, 640, 740) comprises an elastic material.

13. The secondary battery (100) as claimed in one of the preceding claims, further comprising a fourth insulating member on a lower surface of the cap plate (220, 320, 420, 520, 620, 720).

14. The secondary battery (100) as claimed in one of the preceding claims, wherein the secondary battery (100) is a coin cell, with the case (120) having a cylindrical shape and a diameter of 9 mm to 14 mm, and having a height ranging from 4.5 mm to 6 mm.
